# EUROPEAN PATENT SPECIFICATION

(11) **EP 2 243 276 B1**
(45) Date of publication and mention of the grant of the patent: **10.07.2019**
(21) Application number: 08724274.9
(22) Date of filing: 25.03.2008
(51) Int. Cl.: H04L 29/06, H04H 20/18, H04L 9/06, H04L 12/18

(54) **CONTROLLING MEDIA DISTRIBUTION**
MEDIENVERTEILUNGS-STEUERUNG
COMMANDE DE DISTRIBUTION MULTIMÉDIA

(30) Priority: 07.02.2008 GB 0802186
(43) Date of publication of application: 27.10.2010
(73) Proprietor: Telefonaktiebolaget LM Ericsson (publ), 164 83 Stockholm (SE)
(72) Inventor: OHLMAN, Börje, S-167 57 Bromma (SE); SELANDER, Göran, S-16834 Bromma (SE)
(74) Representative: Brann AB
(86) International application number: PCT/SE2008/050327
(87) International publication number: WO 2009/099359

(56) References cited:
- EP-A1- 1 855 223
- EP-A2- 1 345 352
- EP-A2- 1 659 736
- WO-A1-01/56293
- WO-A1-03/024092
- WO-A1-2005/076574
- US-A1- 2002 097 878
- US-A1- 2003 002 675
- US-A1- 2003 149 869
- US-A1- 2005 168 630
- US-B1- 6 266 413

## Description

### TECHNICAL FIELD

The invention relates to the field of controlling media distribution.

### BACKGROUND

Traditionally, radio and television broadcasts have used real-time transmission technologies such as FM, VHF, UHF, satellite and dedicated cable networks. However, other types of broadcast are becoming important alternatives. These include packet-switched based technologies such as the Internet, mobile networks and so on.

Whilst the new types of broadcast technology introduce many benefits over traditional broadcast technologies, such as more efficient use of bandwidth, they do have some drawbacks. One drawback is that the new broadcast technologies can introduce a non-negligible delay of a transmission compared to traditional technologies. This can lead to problems where, for example, a receiver switches between technologies while listing to e.g. a radio program. Furthermore, for transmission of live events such as sports, it can be very annoying if some users hear or see what happens before others. This may occur if, for example, you hear your neighbour (who is watching the broadcast using a different technology to you) cheering before you have seen the goal being scored. Another example of where this may be a problem is if a separate transmission of subtitles for a media broadcast is made from the main broadcast. The subtitles and the media broadcast should be broadcast to appear to the user at the correct time.

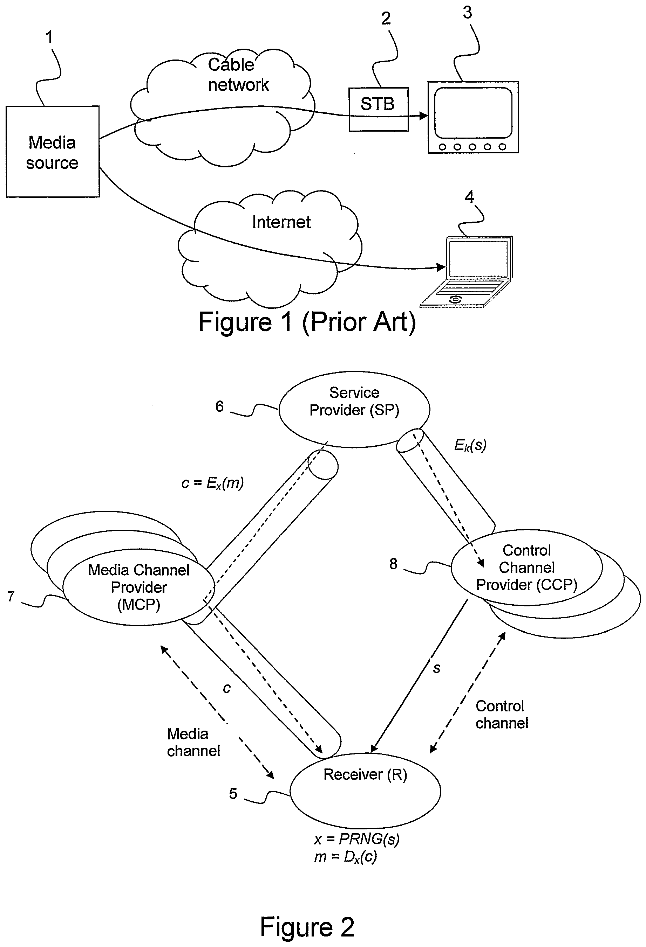

The problem is illustrated in Figure 1, in which a media source 1 broadcasts a media signal. A user who receives the broadcast via a cable network using a Set Top Box (STB) 2 and television 3 may receive the broadcast at a different time to a user who receives the broadcast using a laptop 4 via the Internet. Likewise two users connected to the Internet may receive media at different times. Another problem caused by receiving broadcasts at different times arises during the distribution of stock quotes, in which receivers close to a stock quotation source can receive information earlier than distant receivers. The word "media" may be used interchangeably herein with the word "content", and refers to data that is managed and requires controlled distribution.

The TESLA broadcast authentication protocol, as described in http://www.ece.cmu.edu/∼adrian/projects/tesla-cryptobytes/tesla-cryptobytes.pdf, describes source authentication of broadcast data, but does not address confidentiality. There are a several known broadcast encryption schemes that address the problem of sending an encrypted message to a large user base such that the message can only be decrypted by a dynamically changing authorized subset. "A survey of broadcast encryption", http://math.scu.edu/∼jhorwitz/pubs/broadcast.pdf provides an overview of several different broad cast encryption schemes. The broadcast encryption schemes described require an initial sharing of keys between each authorized receiver and the broadcaster.

US 2002/097878 discloses a method of ensuring that time sensitive information is not viewed before a permitted time and date. This enables Government announcements, share information etc. to be sent out prior to announcement, but with a desired delay in allowing reading of contents until a chosen time and date.

US6266413 discloses a method of creating an identical one-time pad at different locations.

EP 1 659 736 discloses conditional access for receiving a broadcast service.

### SUMMARY

The inventors have realized the problems associated with prior art methods of broadcasting, and have invented a system that uses one or more low bandwidth control channels to publish one-time cryptographic keys to be used to decode an encrypted media stream received via other sources. The one-time cryptographic keys are published at a specific time, which prevents some users having an advance preview of media depending on the transport technology they are using to receive a media channel, and is advantageous in fields such as distributing stock quotes showing sporting events in real time.

By introducing an acceptable delay to the control channel it is possible to ensure that the media distributed via different media channels will be played at the same time, provided that those channels experience a lower delay than the delay introduced to the control channel.

In accordance with an aspect of the invention, there is provided a method of transmitting time-controlled media in accordance with claim 1.

Optionally, prior to encrypting the at least one media chunk, a value derived from the cryptographic materials is used as a seed value for seeding a pseudo random number generator. A One Time Pad is generated using the seed value and the pseudo random number generator, and the One Time Pad is then used to encrypt the at least one media chunk.

Optionally, the method comprises generating a plurality of seed values using a one-way hash function, each seed value of the plurality of seed values being associated with a media chunk. By generating a plurality of seed values, the seed values can be sent in advance to a distributor of seed values.

According to another aspect of the invention, there is provided a control channel provider node in accordance with claim 6.

The transmitter is optionally arranged to transmit the cryptographic materials in a plaintext format.

As an option, the cryptographic materials comprise a seed value arranged to be used to generate a One Time Pad by seeding a pseudo random number generator.

The Control Channel Provider node optionally comprising means for determining when to transmit the cryptographic materials, the determination being made according on the basis of an estimated arrival time of the cryptographic materials at the receiver node. Optionally, the estimated arrival time of the cryptographic materials is determined in part based according to a media chunk transmission time.

### BRIEF DESCRIPTION OF THE DRAWINGS

Figure 1 illustrates schematically in a block diagram a media broadcast over different types of network;
Figure 2 illustrates schematically in a block diagram a system architecture according to an embodiment of the invention;
Figure 3 is a flow diagram illustrating steps according to an embodiment of the invention;
Figure 4 is a signalling diagram illustrating signalling between nodes according to an embodiment of the invention;
Figure 5 illustrates schematically the actions of a receiver according to an embodiment of the invention;
Figure 6 illustrates schematically in a block diagram a receiver according to an embodiment of the invention; and
Figure 7 illustrates schematically in a block diagram a Control Channel Provider node according to an embodiment of the invention.

### DETAILED DESCRIPTION

In addition to providing a media broadcast in the form of an encrypted media stream, a control signal is also broadcast using a control channel. Any type of transmission technology that can provide delay guarantees can be used as the control channel. Such technologies include, but are not limited to, technologies selected from any of traditional broadcast media (such as FM-radio, VHF, UHF, satellite, etc.), fixed telephony, circuit switched mobile telephony, and packet switched networks with QoS guarantees (RSVP enabled IP networks, ATM, etc.).

Prior to broadcast, the media stream is encrypted using a one-time pad derived from a sequence of one-time cryptographic keys. The one-time cryptographic keys are broadcast in plaintext using the control channel. The one-time cryptographic keys are sent with a delay that is acceptable for the specific service and realistic with respect to the used media channels, such that they should not arrive before packets from the corresponding media stream(s). The keys are sent out consecutively at a certain rate or according to a certain scheme. The introduced delayed transmission on the control channel can be predetermined and adapted to the slowest expected time for the receipt of the media stream. The predetermined delay may be adapted to time constraints of the media delivery service, bearing in mind that channels providing media after the key has been received will be at a disadvantage compared to other media channels having advance preview. The predetermined delay should be no more than an acceptable delay to the users of a specific service, and buffers used to store the media stream prior to the receipt of the one-time cryptographic keys must be dimensioned accordingly. When defining the delay of the transmission on the control channel, it is important to take into account the intrinsic delay characteristics of the control channel. There is thus an important balance to strike in order to comply with an acceptable delay from a service point of view and a required delay for avoiding advance preview based on the expected characteristics of the media channels.

In an alternative non-claimed example, a receiver may inform the sender(s) of media and/or keys that a key has been received prior to reception of corresponding media in order for the sender(s) to adjust the sending times to accomplish a change of the time order between reception of media and keys. This can be extended such that all receivers feed back information about media reception in order to allow the sender of keys can adapt to the slowest media channel. These alternative examples are not preferred, because they introduce further delays and receivers that receive the media stream early increase their risk of buffer overflow, and hence losing a portion of the media stream. It should also be noted that, for example, best-effort Internet does not provide any guarantees on time of delivery, so for time critical media delivery services it is not possible to define the delay of the control channel by the maximum delay on the media channel(s).

It is possible to use multiple control channels, or one central control channel. In the case of one central channel, the channel can be seen as a time/clock distribution. Advantages of a central channel alternative include the simplicity of the control system and the reduced capacity needed for transmission of the control signal. In the case of multiple control channels their individual delay can be used to calculate when cryptographic keys can be sent on the individual control channels.

The one time cryptographic keys are used as seed values to compute one-time pads (OTP), as described in the Handbook of Applied Cryptography, http://www.cacr.math.uwaterloo.ca/hac/. The OTPs are used to encrypt the media stream. After broadcasting the crypto keys on the control channel, the same one-time pads can be computed by any receiver and used to decrypt the encrypted content. An advantage of this is that the media content, even though is may arrive at different times depending on the network over which it was received, cannot be decrypted until the OTP cryptographic keys are received, and this should be at approximately the same time for each receiver.

It is possible for the OTP to be broadcast directly on the control channel to obtain the required timing properties, but that would be an inefficient use of bandwidth, since the OTP is as large as the media. By using a pseudo-random number generator (PRNG), with a random and secret cryptographic key as a seed, an OTP can be computed by both the broadcaster and each receiver. By generating a sufficient number of cryptographic keys, the OTPs generated from the sequence of cryptographic keys can be concatenated into a "Super-OTP" of sufficient length for encrypting any media content of arbitrary size. The cryptographic keys and corresponding "basic" OTPs can be generated "on demand", e.g. during live broadcast.

The ratio between the (basic) OTP length and the cryptographic key length must be selected to comply with application specific requirements such as:
- Efficiency: Acceptable bandwidth ratio between media and control channel (this is the same ratio). Bandwidth ratio refers to the ratio between bandwidth required by the media stream and the bandwidth required by the cryptographic keys. If the cryptographic key were itself an OTP then the ratio would be 1, but as the cryptographic key is a seed for generating an OTP then the bandwidth required by the control channel may be significantly less than the bandwidth required by the media channel.
- Security: If the key length = basic OTP length (ratio =1), then the encryption scheme is unconditionally secure but, as noted above, inefficient. For larger ratios, the randomness of the OTP depends on the predictability of the pseudo-random number generator.
- Advance peek: On receipt of the cryptographic key, the entire corresponding basic OTP can be computed immediately. When the cryptographic key used to decode a certain media to be displayed at time *t* is published, the media at time *t*+*d* is also disclosed. If the ratio is relatively high (=the basic OTP is relatively long), then *d* is relatively large which gives some information about the end of this content chunk before it is due.

Note that some of these requirements conflict. Unconditional security and timing control without advance peek can be achieved although this is unlikely to be required. For each given application and context a trade-off has to be made. Assume, for example, that the size ratio between the key and OTP and is large. This means that the required amount of data to be sent over the control channel is a fraction of the required amount of data to be sent over the media channel. Since the control channel has QoS constraints, the cost per bit transmitted is likely to be higher than the cost of sending media streams over best effort channels, and hence the cost for distribution can be shifted between media and control channel by tuning the ratio depending on application. In a time-continuous media distribution setting, a large ratio means that a media player could in principle render the end of the media chunk (say a goal in a football match) before it is supposed to be displayed according to the distribution design. The intended access control would thus be violated, but assuming the size of the advance peek media chunk is not large, this is not a problem in practise. Note that for applications such as stock quotes this is not a problem at all since it may not be necessary to present stock quotes in a particular order.

Note also that a receiving device such as a laptop computer or a Set Top Box (STB) should be capable of receiving and playing the broadcast, and so must be able to receive both a control channel and a media channel.

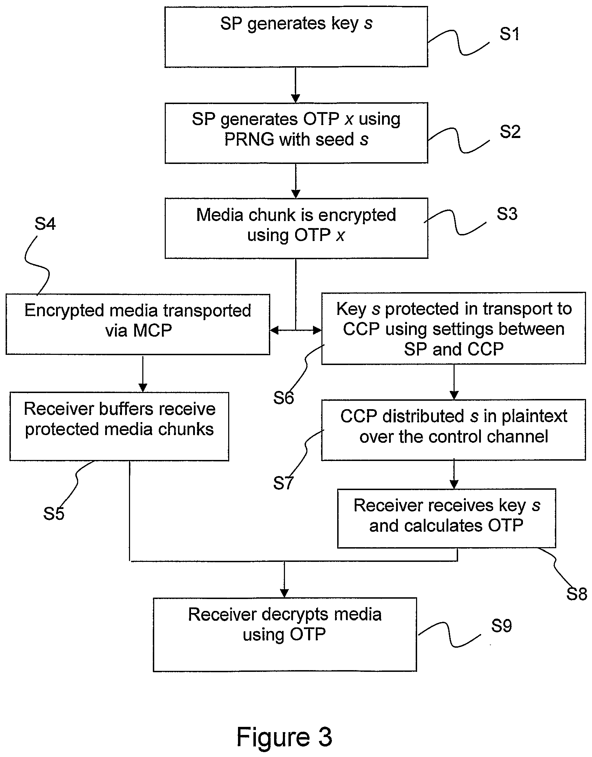

Referring now to Figure 2, there is shown a receiver 5 capable of receiving a media channel 6 and a control channel 7. A Service Provider (SP) 6 provides the media stream and the cryptographic keys. A Media Channel Provider (MCP) 7 and a Control Channel Provider (CCP) 8 receive the media stream and the cryptographic keys respectively from the SP 6, and forward the media stream and the cryptographic keys to the receiver 5. The SP, MCP and CCP may partly or completely coincide. The details in Figure 2 are explained below in conjunction with the explanation of Figure 3. Generally, Eₓ(m) shall denote encryption of message m using key x.

The SP 6 protects the content for delivery over a media channel. It provides secret cryptographic keys for delivery over the control channel, associated meta-data such as relevant media identifier(s), time constraints for delivery and associated security management, e.g. the SP 6 may protect the cryptographic keys in transport to the CCP 8 using a security association contained in the agreement. The CCP 8 distributes cryptographic keys in plaintext over a control channel, and the MCP 7 distributes the protected media stream. The Receiver 5 receives both the encrypted media stream and the cryptographic keys, and decrypts the media stream using the cryptographic keys in order to show the content of the media stream.

We now describe the cryptographic parts in more detail. The SP 6 fixes the ratio *r* = the expansion factor in the pseudo-random number generator = the factor between the required bandwidth of the media and control channels by taking into consideration the requirements on security, efficiency etc. as discussed above.

Before the service is started, the SP 6 sets up an agreement with one or multiple CCPs 8. With this agreement a CCP 8 commits to distribute cryptographic keys at certain timeliness, and also to ensure the confidentiality of those keys before distribution. Furthermore, the agreement contains any necessary information to establish a protected communication for transportation of cryptographic keys between the SP 6 and the CCP 8 (e.g. which keys to use in a standardized key transportation protocol). The nature of the agreement depends on the trust model between the SP 6 and of the CCPs 8.

The SP 6 also sets up agreements with the MCPs 7. This agreement does not require the same security setup as that with the CCPs 8 since the media sent to a MCP 7 is never decrypted by the MCP 8. Note that the media channel need not be implemented as an electronic or optical communication network, but may also be in the form of a physical distribution of digital information such as CD/DVD, magnetic tapes, etc. provided the delay for such distribution is acceptable.

Once the agreements are set up, and when the SP 6 has media to distribute, the following sequence occurs, as illustrated in Figure 3. The media is divided into media chunks of a designated size. The following numbering corresponds to the numbering of Figure 3:
S1. The SP 6 generates a random (and secret) cryptographic key *s* of a given length |*s*|=*L* (e.g. *L*=64 bits)
S2. The SP 6 computes a One-Time Pad (OTP) *x* of length |*x*|= *r*^{∗}*L,* using a known Pseudo-Random Number Generator (PRNG) (e.g. ANSI X9.17) with seed *s*: x = PRNG(s). Note that *r* is the previously determined ratio.
S3. The next chunk of media *m* of length |*m*|=*r*^{∗}*L* is protected with the OTP *x* using a known encryption algorithm Eₓ(m) (e.g. encrypted using the Vernam cipher *c* = *m* XOR *x*)
S4. The encrypted media *c* = Eₓ(m) is transported to the MCP 7 for distribution over the media channel. As noted above, the media channel need not be aligned with the control channel as long as the media is available before the control signal at the receiver 5.
S5. The receiver 5 receives the encrypted media c from the MCP 7 and stores the received encrypted media chunks in a buffer.
S6. Concurrently with steps S4 and S5, the cryptographic key *s* is protected and transported to the authorized CCP(s) 8 using the agreed key transport protocol and key transport keys. SP may e.g. send Eₖ(s), i.e. the cryptographic key s encrypted with the key transport key k.
S7. The cryptographic key s is decrypted, if necessary, and distributed by the CCP(s) in plaintext over the control channel(s) at a certain time.
S8. The receiver 5 receives the plaintext cryptographic key s and uses it to calculate the OTP *x*=*PRNG(s).*
S9. The receiver uses the calculated OTP x to decrypt the encrypted media chunks c held in the receiver's buffer: Dₓ(c) = Dₓ(Eₓ(m)) = m, where Dₓ() denotes decryption using key x.

A header is added to each chunk of media, the header comprising a media identifier and a sequence number of the chunk. If the media channel is not multiplexed with other media channels, the media channel ID can be made implicit, and need not be repeated for each chunk. If the media channel supports some internal sequence numbering of the chunks, the sequence number can also be implicit. The control signal packets are provided with headers in the same manner. In this way, a given cryptographic key can be matched with a corresponding media chunk.

Note that the flow diagram of Figure 3 does not discuss transport of the cryptographic key s between the SP 6 and the CCP 8. There are several ways in which s can be transported, some examples of which are as follows:
a. Just in time: The SP 6 delays the transport to the CCP 8 such that it can be redistributed directly by the CCP 8 on the control channel at the anticipated arrival to the CCP 8. This setting does not require the CCP 8 to keep the keys confidentially in storage and also does not risk any advance pre-view should the CCP 8 have problems with sending the control system at the required time.
b. Advance transport of keys: The SP 6 sends the cryptographic keys consecutively to the CCP 8, and expects the CCP 8 to store each key confidentially until its their correct distribution time. If a cryptographic key is being sent to the receiver 5 too early this will result in a slight preview, with limited damage. There is also the option for the SP 6 to audit the control channel and in this case "punish" a faulting CCP 8 by terminating the cryptographic key flow in the middle of a session.
c. Batches of keys: The SP 6 pre-generates and distributes a set of cryptographic keys. Again, the SP 6 expects the CCP 8 to store the keys confidentially until the correct distribution time. Sending a batch of keys can be more efficient and avoids the SP 6 and CCP 8 having to rely on the availability of their communication channel. But the trust in the CCP 8 must be greater since it is required to keep the cryptographic keys confidential for a longer period of time.

In an optional embodiment that can be used to optimize certain data exchange, in particular between the SP 6 and the CCP 8, the SP 6 generates a hash chain, *s*₁, ... , *s_{N},* , where *s*₁ is random and *s*_{*i*+1} = *h*(*sᵢ*) for *i*=1, ..., *N*-1, where *h* is a known secure one-way hash function (a current example would be, for example, SHA256, as described in http://csrc.nist.gov/publications/fips/fips180-2/fips180-2.pdf) and the size of content for the given session < *r*^{∗}*L*^{∗}*N*. Alternatively, to determine the required length of the hash chain for a given content size *S*: *N* > *S*/(*r*^{∗}*L*).

The cryptographic keys used are the reversed hash chain i.e. *s_{N}*,...,*s*₁, since knowledge of one element allows derivation of elements with a higher index but not elements with a lower index, and so access to one key enables instant access to all previous keys, but not access to future keys.

Where batches of keys are pre-generated by the SP 6 and distributed to the CCP 8 in advance, it is sufficient for the SP 6 to send only one cryptographic key *s*₁ to the trusted CCP 8 for a given session, since all necessary security data can be derived from that using the hash function and the PRNG.

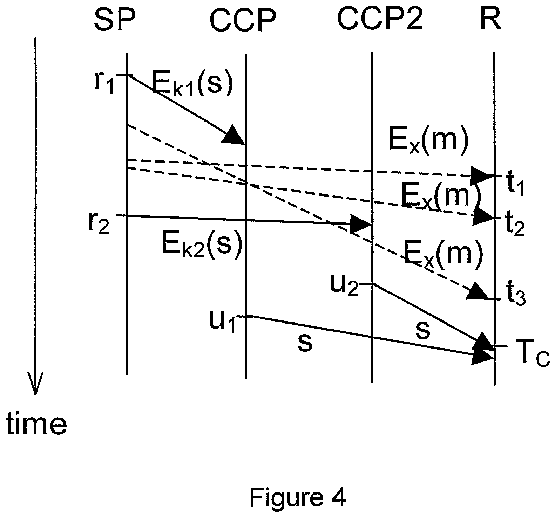

Referring now to Figure 4, an example of signalling illustrates events taking place at different times and in the different nodes in a media and key distribution scenario according to an embodiment of the invention.

Only one receiver 5 is illustrated, which receives content over three media channels (A, B, C) and control information over two channels (1,2), but the example would apply to many receivers R1,...,R*n*, each receiver receiving content and keys over a different media channel and/or control channel, in which R1= (A,1), R2= (A,2), R3=(B,1) etc.

Protected content Eₓ(m) is distributed using one or more Media Channel Providers over three different media channels (illustrated by dashed lines) having different bandwidths, and arriving at the Receiver 5 at times t₁, t₂ and t₃ respectively. Protected keys Eₖ₁(*s*) and Eₖ₂(*s*) are sent from the SP 6 to two Control Channel Providers CCP1 and CCP2 at times r₁ and r₂, respectively, which may occur before or after the media transport. The CCPs decrypt the key s and, on the basis of the QoS on their respective control channels, transmit the key s in plaintext at times u₁ and u₂, respectively, such that they arrive at the Receiver at approximately time T_{C}. Note that T_{C} is calculated to be greater than any of t₁, t₂ or t₃ to ensure that the key s arrives after the media.

Each key s is associated with a target arrival time T_{C}, which is specified by the SP based on the timeliness requirements of the service and the expected arrival times of the content t₁. The relevant information, T_{C} or information required to calculate T_{C} (such as the expected delays for the media channels and the maximum acceptable delay for the service), is delivered from the SP to a CCP in conjunction with the delivery of the protected key. CCP1 schedules the key sending time u₁ based on the intended arrival time T_{C} and characteristics of the control channel. Similarly, CCP2 schedules the sending time u₂ based on the same intended arrival time T_{C} and potentially different control channel characteristics. A CCP must consider the possible different transmission times to different receivers to ensure that the arrival time of the key at the receiver does not significantly deviate from the target arrival time T_{C}.

In a very simple exemplary embodiment, there is only one CCP and one MCP, both embodied in the SP. The SP estimates a required delay for the control signalling. The estimate has a lower limit of the expected transmission times on the media channels and an upper limit by the service requirements. This should provide the SP with a 'window' of acceptable delays. If the SP does not have an acceptable window of delays, then it must select media channels with faster transmission time or loosen the service requirements. The SP specifies a value of the predetermined delay of the control channel signalling within this interval. For a given encrypted media chunk Eₓ(m), and its expected time(s) of arrival over relevant media channel(s) it is now possible to calculate T_{C} based on the predetermined delay. The SP sends the associated cryptographic key s at time u = T_{C} (transmission time on the control channel).

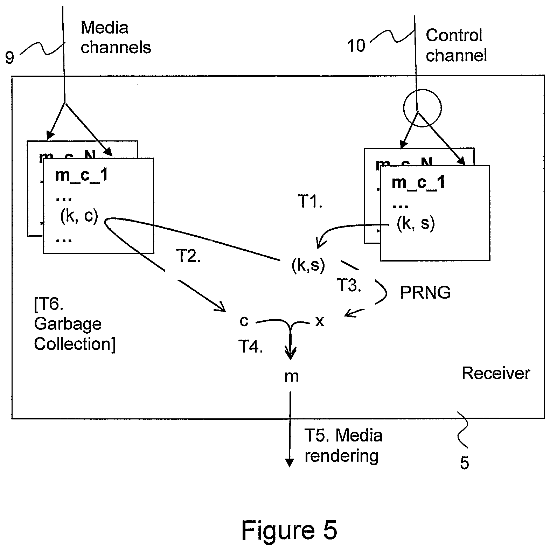

Referring now to Figure 5, the Receiver 5 receives encrypted content over the media channel 9 and control data over the control channel 10. Encrypted media chunks are stored in a buffer arrangement 13 in the receiver 5 where they can be accessed based on media identifier and sequence number.

In the case of offline media distribution such as CD/DVD, the CD/DVD constitutes the media channel itself and the media is already stored on the CD/DVD, and so the CD/DVD effectively acts as the "buffer".

The control channel is scanned in real time by a processing unit with capacity matching the line speed of the control channel. Each received control signal packet is placed in a media channel specific FIFO control signal buffer, part of buffer arrangement 13, for further processing. The processor is arranged to match received control data to a corresponding media chunk thereby enabling decryption of media chunk using the control data.

For each media channel, a decoding unit performs the following steps:
T1. The first control signal buffer is read.
T2. The sequence number *k* is extracted from the control signal packet header and is used retrieve the corresponding encrypted media chunk *c* from the media channel buffer.
T3. In parallel, the associated OTP *x* is computed using the PRNG with seed *s* as read from the control signal buffer. Because the SP and the receiver use the same PRNG and seed *s*, they will each generate the same OTP *x.*
T4. The media chunk *c* is decrypted using the known decryption algorithm with key *x* (e.g. if the Vernam cipher was used then *m* = *c* XOR *x*). The media *m* is now available to the receiver 5 in plaintext.
T5. The plaintext media *m* is rendered by the receiver.
T6. If needed, garbage collection could be implemented for the media channel buffer to avoid buffer overflow. This step can be interleaved with other steps.

In an alternative embodiment a key buffer is provided in order to manage a scenario in which a media channel has a sufficiently large delay to cause media to appear after the corresponding key. The key buffer may be included in the buffer arrangement 13 shown in Figure 5.

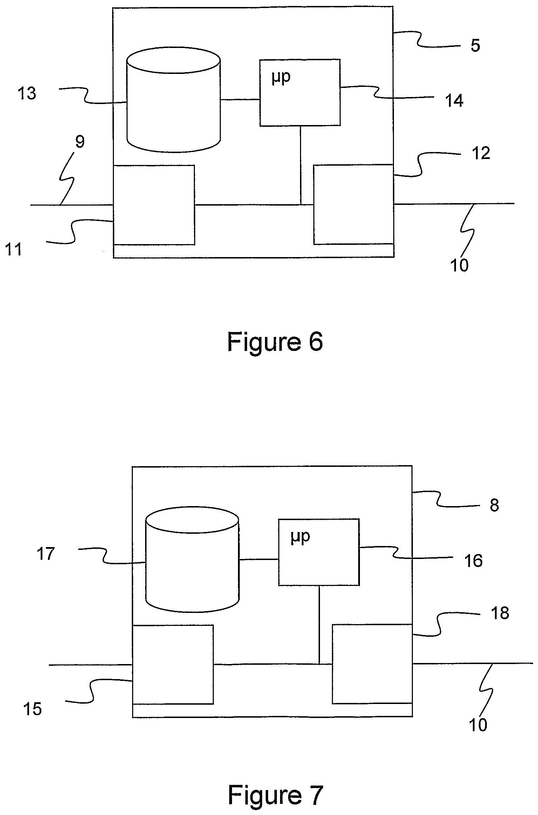

Referring to Figure 6, there is illustrated a receiver 5 according to an embodiment of the invention. The receiver 5 comprises a first 11 and second 12 receiver for receiving signalling from the media channel 9 and the control channel 10 respectively. Of course, the receivers may be constituted in a single receiver. A buffer arrangement 13 is provided for storing received encrypted media chunks. A processor 14 is also provided for using a cryptographic key received over the control channel to decrypt associated media chunks retrieved from the buffer arrangement 13. Means (not shown) are also provided to pass the decrypted media chunks to another function or node for rendering.

Referring to Figure 7 herein, there is illustrated a Control Channel Provider node 8 according to an embodiment of the invention. A receiver 15 is provided for receiving from a Service Provider node a cryptographic key to be used to decrypt a media chunk. The received cryptographic key may itself be encrypted for protection during transport between a Service Provider and the Control Channel Provider node. A processor 16 is provided for handling the cryptographic key, and a memory 17 may be provided for storing the cryptographic key. The processor 16 determines when each cryptographic key should be sent on the time-guaranteed control channel to the receiver node, meaning that the control channel should have constant predictable delay. This determination may be based on QoS characteristics of the control channel. A transmitter 18 is also provided for sending the cryptographic key to the receiver node 5 on the control channel 10. The cryptographic key is preferably sent in plaintext, in which case the processor must decrypt the cryptographic key prior to sending it.

By using a common control channel with a guaranteed delay, it possible to broadcast media using different broadcast technologies and have the media displayed at approximately the same time on all the recipients' receivers regardless of the broadcast technology used. The invention can be used for controlled distribution of any type of digital information that should only be disclosed at a certain time or pace, e.g. IPR protected material, stock quotes, live sports events, press releases etc.

Note that the receiver does not need to pre-establish any security data with any party before the reception of cryptographic keys, since the keys are sent in plaintext. The receiver need only wait until all cryptographic information is available before the encrypted media can be decrypted and rendered. Naturally, the end-user will wish to have access to the media content as soon as possible after the media and control data has been made available, and so it is likely that all recipients of the broadcast will be able to view it at the same time regardless of the broadcast technology used. Furthermore, the time-guaranteed control channel only requires a narrow bandwidth, and therefore has low costs associated with it.

It will be appreciated by the person of skill in the art that various modifications may be made to the embodiments described above without departing from the scope of the present invention.

## Claims

1. A method of transmitting time-controlled media, the method comprising:
encrypting (s3) at least one media chunk with cryptographic materials;
distributing (s4) the at least one encrypted media chunk over at least one media channel; and
distributing (s7) the cryptographic materials used to encrypt the at least one media chunk, **characterised in that** the cryptographic materials are sent to a receiver node (5) over a time-guaranteed control channel after a predetermined delay after the distributing (s4) of the at least one encrypted media chunk, the predetermined delay being determined by intrinsic delay characteristics of the time-guaranteed control channel, wherein the cryptographic materials arrive at the receiver node (5) at a target arrival time (T_{c}), wherein the target arrival time (T_{c}) is greater than expected arrival times (t₁, t₂, and t₃) of the at least one encrypted media chunk at the receiver node (5).

2. The method according to claim 1, further comprising:
prior to encrypting (s3) the at least one media chunk, using a value derived from the cryptographic materials as a seed value for seeding a pseudo random number generator;
generating a One Time Pad using the seed value and the pseudo random number generator; and
using the One Time Pad to encrypt the at least one media chunk.

3. The method according to claim 2, further comprising generating a plurality of seed values using a one-way hash function, each seed value of the plurality of seed values being associated with a media chunk.

4. A method of distributing time-controlled media, the method comprising a method of transmitting the at least one encrypted media chunk as claimed in claim 1, the method of distributing time-controlled media further comprising:
at the receiver node (5), receiving (s5) the at least one encrypted media chunk over the at least one media channel;
storing the at least one encrypted media chunk in a memory at the receiver node (5);
receiving (s8) the cryptographic materials over the time-guaranteed control channel; and
using (s9) the cryptographic materials to decrypt the at least one encrypted media chunk prior to rendering the at least one decrypted media chunk, **characterised in that** the cryptographic materials are distributed over the time-guaranteed control channel and that the predetermined delay is determined by the intrinsic delay characteristics of the time-guaranteed control channel, wherein the cryptographic materials arrive at the receiver node (5) at the target arrival time (T_{c}), wherein the target arrival time (T_{c}) is greater than the expected arrival times (t₁, t₂, and t₃) of the at least one encrypted media chunk at the receiver node (5), and further wherein the target arrival time (T_{c}) is based on the timeliness requirements of the service.

5. The method according to claim 4, further comprising:
prior to encrypting (s3) the at least one media chunk, using a value derived from the cryptographic materials as a seed value for seeding a pseudo random number generator, generating a One Time Pad using the seed value and the pseudo random number generator, and using the One Time Pad to encrypt the at least one media chunk; and
after receipt of the cryptographic materials at the receiver node (5), using the value derived from the received cryptographic materials as the seed value for seeding the pseudo random number generator, generating the One Time Pad using the seed value and the pseudo random number generator, and using the One Time Pad to decrypt the at least one encrypted media chunk.

6. A Control Channel Provider node (8) for providing cryptographic materials related to time-controlled media chunks transmitted over at least one media channel, the Control Channel Provider node (8) comprising:
a receiver (15) for receiving, from a Service Provider node, cryptographic materials to be used to decrypt at least one encrypted media chunk; and
a transmitter (18) for transmitting the cryptographic materials, **characterised in that** the transmitter (18) is configured to transmit the cryptographic materials over a time-guaranteed control channel such that the cryptographic materials are transmitted after a predetermined delay after the transmission of the at least one encrypted media chunk, wherein the predetermined delay is determined by intrinsic delay characteristics of the time-guaranteed control channel, wherein the cryptographic materials are transmitted to a receiver node (5), wherein the cryptographic materials arrive at the receiver node (5) at a target arrival time (T_{c}), wherein the target arrival time (T_{c}) is greater than expected arrival times (t₁, t₂, and t₃) of the at least one encrypted media chunk at the receiver node (5).

7. The Control Channel Provider node (8) according to claim 6, wherein the transmitter (18) is configured to transmit the cryptographic materials in a plaintext format.

8. The Control Channel Provider node (8) according to claim 6 or 7, wherein the cryptographic materials comprise a seed value arranged to be used to generate a One Time Pad by seeding a pseudo random number generator.

9. The Control Channel Provider node (8) according to claim 6, 7 or 8, further comprising means for determining when to transmit the cryptographic materials, the determination being made on the basis of an estimated arrival time of the cryptographic materials at the receiver node.

10. The Control Channel Provider node (8) according to claim 9, wherein the estimated target arrival time of the cryptographic materials is determined in part according to a media chunk transmission time.

## Patentansprüche

1. Verfahren zum Übertragen von zeitgesteuerten Medien, wobei das Verfahren Folgendes umfasst:
Verschlüsseln (s3) von mindestens einem Medienchunk mit kryptographischen Materialien;
Verteilen (s4) des mindestens einen verschlüsselten Medienchunks über mindesten einen Medienkanal; und
Verteilen (s7) der kryptographischen Materialen, die zum Verschlüsseln des mindestens einen Medienchunks verwendet wurden, **dadurch gekennzeichnet, dass** die kryptographischen Materialien über einen zeitgarantierten Steuerkanal nach einer vorbestimmten Verzögerung nach dem Verteilen (s4) des mindestens einen verschlüsselten Medienchunks an einen Empfängerknoten (5) gesendet werden, wobei die vorbestimmte Verzögerung durch intrinsische Vorzögerungsmerkmale des zeitgarantierten Steuerkanals bestimmt wird, wobei die kryptographischen Materialien zu einer Zielankunftszeit (T_{c}) an dem Empfängerknoten (5) ankommen, wobei die Zielankunftszeit (T_{c}) größer ist als erwartete Ankunftszeiten (t₁, t₂ und t₃) des mindestens einen verschlüsselten Medienchunks an dem Empfängerknoten (5).

2. Verfahren nach Anspruch 1, ferner umfassend:
vor dem Verschlüsseln (s3) des mindestens einen Medienchunks Verwenden eines Werts, der von den kryptographischen Materialien abgeleitet ist, als einen Ausgangswert zum Starten eines Pseudo-Zufallszahlengenerators;
Erzeugen einer Einmalverschlüsselung unter Verwendung des Ausgangswerts und des Pseudo-Zufallszahlengenerators; und
Verwenden der Einmalverschlüsselung, um das mindestens eine Medienchunk zu verschlüsseln.

3. Verfahren nach Anspruch 2, ferner umfassend ein Erzeugen einer Vielzahl von Ausgangswerten unter Verwendung einer einseitigen Hashfunktion, wobei jeder Ausgangswert der Vielzahl von Ausgangswerten mit einem Medienchunk assoziiert ist.

4. Verfahren zum Verteilen von zeitgesteuerten Medien, wobei das Verfahren ein Verfahren zum Übertragen des mindestens einen verschlüsselten Medienchunks nach Anspruch 1 umfasst, wobei das Verfahren zum Verteilen von zeitgesteuerten Medien ferner Folgendes umfasst:
Empfangen (s5) des mindestens einen verschlüsselten Medienchunks an einem Empfängerknoten (5) über den mindestens einen Medienkanal;
Speichern des mindestens einen verschlüsselten Medienchunks in einem Speicher in dem Empfängerknoten (5);
Empfangen (s8) der kryptographischen Materialen über den zeitgarantierten Steuerkanal; und
Verwenden (s9) der kryptographischen Materialien dazu, das mindestens eine verschlüsselte Medienchunk zu entschlüsseln, bevor das mindestens eine entschlüsselte Medienchunk gerendert wird, **dadurch gekennzeichnet, dass** die kryptographischen Materialien über den zeitgarantierten Steuerkanal verteilt werden und dadurch, dass die vorbestimmte Verzögerung durch die intrinsischen Verzögerungsmerkmale des zeitgarantierten Steuerkanals bestimmt werden, wobei die kryptographischen Materialien zu der Zielankunftszeit (T_{c}) an dem Empfängerknoten (5) ankommen, wobei die Zielankunftszeit (T_{c}) größer ist als die erwarteten Ankunftszeiten (t₁, t₂ und t₃) des mindestens einen verschlüsselten Medienchunks an dem Empfängerknoten (5), und wobei die Zielankunftszeit (T_{c}) ferner auf den Pünktlichkeitsanforderungen des Diensts basiert.

5. Verfahren nach Anspruch 4, ferner umfassend:
vor dem Verschlüsseln (s3) des mindestens einen Medienchunks Verwenden eines Werts, der von den kryptographischen Materialien abgeleitet ist, als einen Ausgangswert zum Starten eines Pseudo-Zufallszahlengenerators, Erzeugen einer Einmalverschlüsselung unter Verwendung des Ausgangswerts und des Pseudo-Zufallszahlengenerators, und Verwenden der Einmalverschlüsselung zum Verschlüsseln des mindestens einen Medienchunks; und
nach dem Empfang der kryptographischen Materialen an dem Empfängerknoten (5) Verwenden des Werts, der von den empfangenen kryptographischen Materialien abgeleitet ist, als den Ausgangswert zum Starten des Pseudo-Zufallszahlengenerators, Erzeugen der Einmalverschlüsselung unter Verwendung des Ausgangswerts und des Pseudo-Zufallszahlengenerators und Verwenden der Einmalverschlüsselung, um das mindestens eine verschlüsselte Medienchunk zu entschlüsseln.

6. Knoten (8) eines Steuerkanalanbieters zum Bereitstellen von kryptographischen Materialien, die sich auf zeitgesteuerte Medienchunks beziehen, die über mindestens einen Medienkanal übertragen werden, wobei der Knoten (8) des Steuerkanalanbieters Folgendes umfasst:
einen Empfänger (15) zum Empfangen von kryptographischen Materialien von einem Dienstanbieterknoten, die zum Entschlüsseln von mindestens einem verschlüsselten Medienchunk verwendet werden sollen; und
einen Transmitter (18) zum Übertragen der kryptographischen Materialien, **dadurch gekennzeichnet, dass** der Transmitter (18) dazu konfiguriert ist, die kryptographischen Materialien über einen zeitgarantierten Steuerkanal derart zu übertragen, dass die kryptographischen Materialien nach einer vorbestimmten Verzögerung nach dem Übertragen des mindestens einen verschlüsselten Medienchunks übertragen werden, wobei die vorbestimmte Verzögerung durch intrinsische Verzögerungsmerkmale des zeitgarantierten Steuerkanals bestimmt werden, wobei die kryptographischen Materialien an einen Empfängerknoten (5) übertragen werden, wobei die kryptographischen Materialien zu einer Zielankunftszeit (T_{c}) an dem Empfängerknoten (5) ankommen, wobei die Zielankunftszeit (T_{c}) größer ist als erwartete Ankunftszeiten (t₁, t₂ und t₃) des mindestens einen verschlüsselten Medienchunks an dem Empfängerknoten (5).

7. Knoten (8) eines Steuerkanalanbieters nach Anspruch 6, wobei der Transmitter (18) dazu konfiguriert ist, die kryptographischen Materialien in einem Klartextformat zu übertragen.

8. Knoten (8) eines Steuerkanalanbieters nach Anspruch 6 oder 7, wobei die kryptographischen Materialien einen Ausgangswert umfassen, der dazu ausgelegt ist, dazu verwendet zu werden, eine Einmalverschlüsselung durch ein Starten eines Pseudo-Zufallszahlengenerators zu erzeugen.

9. Knoten (8) eines Steuerkanalanbieters nach Anspruch 6, 7 oder 8, ferner umfassend Mittel zum Bestimmen, wann die kryptographischen Daten übertragen werden sollen, wobei das Bestimmen auf der Basis einer geschätzten Ankunftszeit der kryptographischen Materialien an dem Empfängerknoten erfolgt.

10. Knoten (8) eines Steuerkanalanbieters nach Anspruch 9, wobei die geschätzte Zielankunftszeit der kryptographischen Materialien teilweise gemäß einer Medienchunkübertragungszeit bestimmt wird.

## Revendications

1. Procédé de transmission d'un contenu multimédia à commande temporelle, le procédé comprenant :
le cryptage (s3) d'au moins un bloc multimédia à l'aide de matériels cryptographiques ;
la distribution (s4) de l'au moins un bloc multimédia crypté sur au moins un canal multimédia ; et
la distribution (s7) des matériels cryptographiques utilisés pour crypter l'au moins un bloc multimédia, **caractérisé en ce que** les matériels cryptographiques sont envoyés à un noeud récepteur (5) sur un canal de commande à temps garanti après un délai prédéterminé après la distribution (s4) de l'au moins un bloc multimédia crypté, le délai prédéterminé étant déterminé par des caractéristiques de délai intrinsèques du canal de commande à temps garanti, dans lequel les matériels cryptographiques arrivent au niveau du noeud récepteur (5) à une heure d'arrivée cible (T_{c}), dans lequel l'heure d'arrivée cible (T_{c}) est ultérieure à des heures d'arrivée prévues (t₁, t₂ et t₃) de l'au moins un bloc multimédia crypté au niveau du noeud récepteur (5).

2. Procédé selon la revendication 1, comprenant en outre :
avant le cryptage (s3) de l'au moins un bloc multimédia, l'utilisation d'une valeur dérivée des matériels cryptographiques en tant que valeur de départ pour démarrer un générateur de nombre pseudo aléatoire ;
la génération d'un masque jetable à l'aide de la valeur de départ et du générateur de nombre pseudo aléatoire ; et
l'utilisation du masque jetable pour crypter l'au moins un bloc multimédia.

3. Procédé selon la revendication 2, comprenant en outre la génération d'une pluralité de valeurs de départ à l'aide d'une fonction de hachage à sens unique, chaque valeur de départ de la pluralité de valeurs de départ étant associée à un bloc multimédia.

4. Procédé de distribution d'un contenu multimédia à commande temporelle, le procédé comprenant un procédé de transmission de l'au moins un bloc multimédia crypté selon la revendication 1, le procédé de distribution de contenu multimédia à commande temporelle comprenant en outre :
au niveau du noeud récepteur (5), la réception (s5) de l'au moins un bloc multimédia crypté sur l'au moins un canal multimédia ;
le stockage de l'au moins un bloc multimédia crypté dans une mémoire au niveau du noeud récepteur (5) ;
la réception (s8) des matériels cryptographiques sur le canal de commande à temps garanti ; et
l'utilisation (s9) des matériels cryptographiques pour décrypter l'au moins un bloc multimédia crypté avant la restitution de l'au moins un bloc multimédia décrypté, **caractérisé en ce que** les matériels cryptographiques sont distribués sur le canal de commande à temps garanti et **en ce que** le délai prédéterminé est déterminé par les caractéristiques de délai intrinsèques du canal de commande à temps garanti, dans lequel les matériels cryptographiques arrivent au niveau du noeud récepteur (5) à l'heure d'arrivée cible (T_{c}), dans lequel l'heure d'arrivée cible (T_{c}) est ultérieure aux heures d'arrivée prévues (t₁, t₂ et t₃) de l'au moins un bloc multimédia crypté au niveau du noeud récepteur (5), et en outre dans lequel l'heure d'arrivée cible (T_{c}) est basée sur les exigences de rapidité du service.

5. Procédé selon la revendication 4, comprenant en outre :
avant le cryptage (s3) de l'au moins un bloc multimédia, l'utilisation d'une valeur dérivée des matériels cryptographiques en tant que valeur de départ pour démarrer un générateur de nombre pseudo aléatoire, la génération d'un masque jetable à l'aide de la valeur de départ et du générateur de nombre pseudo aléatoire, et l'utilisation du masque jetable pour crypter l'au moins un bloc multimédia ; et
après la réception des matériels cryptographiques au niveau du noeud récepteur (5), l'utilisation de la valeur dérivée des matériels cryptographiques reçus en tant que valeur de départ pour démarrer le générateur de nombre pseudo aléatoire, la génération du masque jetable à l'aide de la valeur de départ et du générateur de nombre pseudo aléatoire, et l'utilisation du masque jetable pour décrypter l'au moins un bloc multimédia crypté.

6. Noeud fournisseur de canal de commande (8) destiné à fournir des matériels cryptographiques liés à des blocs multimédias à commande temporelle transmis sur au moins un canal multimédia, le noeud fournisseur de canal de commande (8) comprenant :
un récepteur (15) pour recevoir, à partir d'un noeud fournisseur de services, des matériels cryptographiques à utiliser pour décrypter au moins un bloc multimédia crypté ; et
un transmetteur (18) pour transmettre les matériels cryptographiques, **caractérisé en ce que** le transmetteur (18) est configuré pour transmettre les matériels cryptographiques sur un canal de commande à temps garanti de sorte que les matériels cryptographiques sont transmis après un délai prédéterminé après la transmission de l'au moins un bloc multimédia crypté, dans lequel le délai prédéterminé est déterminé par des caractéristiques de délai intrinsèques du canal de commande à temps garanti, dans lequel les matériels cryptographiques sont transmis à un noeud récepteur (5), dans lequel les matériels cryptographiques arrivent au niveau du noeud récepteur (5) à une heure d'arrivée cible (T_{c}), dans lequel l'heure d'arrivée cible (T_{c}) est ultérieure à des heures d'arrivée prévues (t₁, t₂ et t₃) de l'au moins un bloc multimédia crypté au niveau du noeud récepteur (5).

7. Noeud fournisseur de canal de commande (8) selon la revendication 6, dans lequel le transmetteur (18) est configuré pour transmettre les matériels cryptographiques dans un format texte brut.

8. Noeud fournisseur de canal de commande (8) selon la revendication 6 ou 7, dans lequel les matériels cryptographiques comprennent une valeur de départ conçue pour être utilisée afin de générer un masque jetable par le démarrage d'un générateur de nombre pseudo aléatoire.

9. Noeud fournisseur de canal de commande (8) selon la revendication 6, 7 ou 8, comprenant en outre un moyen pour déterminer l'heure de transmission des matériels cryptographiques, la détermination étant effectuée sur la base d'une heure d'arrivée estimée des matériels cryptographiques au niveau du noeud récepteur.

10. Noeud fournisseur de canal de commande (8) selon la revendication 9, dans lequel l'heure d'arrivée cible estimée des matériels cryptographiques est déterminée en partie en fonction d'une heure de transmission de bloc multimédia.
